(19)

Europäisches
Patentamt
European
Patent Office
Office européen
des brevets

(11)    EP 3 176 762 A1

(12)    **EUROPEAN PATENT APPLICATION**
published in accordance with Art. 153(4) EPC

(43) Date of publication:
07.06.2017 Bulletin 2017/23

(21) Application number: 15827219.5

(22) Date of filing: 10.07.2015

(51) Int Cl.:
*G07D 11/00* (2006.01)

(86) International application number:
**PCT/CN2015/083710**

(87) International publication number:
**WO 2016/015555 (04.02.2016 Gazette 2016/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: 31.07.2014  CN 201410372966

(71) Applicant: GRG Banking Equipment Co., Ltd.
Guangzhou, Guangdong 510663 (CN)

(72) Inventors:
• XU, Jun
  **Guangzhou**
  **Guangdong 510663 (CN)**
• WANG, Qinghua
  **Guangzhou**
  **Guangdong 510663 (CN)**
• DONG, Xuewen
  **Guangzhou**
  **Guangdong 510663 (CN)**

(74) Representative: Lorenz & Kopf PartG mbB
**Patentanwälte,**
**LKGLOBAL**
**Brienner Straße 11**
**80333 München (DE)**

(54) **BANKNOTE DISTRIBUTION METHOD, BANKNOTE DISTRIBUTION DEVICE AND FINANCIAL SELF-SERVICE EQUIPMENT**

(57)    A banknote distribution method, a banknote distribution device (504) and financial self-service equipment, which are used for removing the limitation of the denomination and number of banknotes of financial self-service equipment, greatly expanding the banknote distribution capacity and the banknote distribution range of the financial self-service equipment, meeting the demand for different banknote distribution limits of customers and improving the use experience of the customers. The method comprises: acquiring the sequences and the corresponding denominations of banknotes of a plurality of mixed banknote boxes (501) (101), wherein banknotes with a plurality of denominations are stored in a mixed mode in the mixed banknote boxes (501) and taken or stored in a stack mode; acquiring the number and the denomination of banknotes of a plurality of single banknote boxes (502) (102), wherein banknotes with only one denomination are stored in the single banknote boxes (502); acquiring a current banknote distribution limit (103); obtaining a banknote distribution result according to preset banknote distribution rules and the banknote distribution limit (104), wherein the banknote distribution result records the corresponding number of banknotes withdrawn from each mixed banknote box (501) and the corresponding number of banknotes withdrawn from each single banknote box (502) so that the total denomination of the withdrawn banknotes is equal to the banknote distribution limit; and outputting the banknotes according to the banknote distribution results (105).

```
┌──────────────────────────────────────────────────────────────┐
│ acquire sequences and denominations of banknotes in a plurality of │──101
│ mixed banknote boxes                                           │
└──────────────────────────────────────────────────────────────┘

┌──────────────────────────────────────────────────────────────┐
│ acquire a number and denominations of banknotes in a plurality of │──102
│ single banknote boxes                                          │
└──────────────────────────────────────────────────────────────┘

┌──────────────────────────────────────────────────────────────┐
│ acquire a banknote dispensing amount                           │──103
└──────────────────────────────────────────────────────────────┘

┌──────────────────────────────────────────────────────────────┐
│ obtain a banknote dispensing result based on a preset banknote │──104
│ dispensing rule and the banknote dispensing amount             │
└──────────────────────────────────────────────────────────────┘

┌──────────────────────────────────────────────────────────────┐
│ output banknotes based on the banknote dispensing result       │──105
└──────────────────────────────────────────────────────────────┘
```

Figure 1

**Description**

The present application claims the priority to Chinese Patent Application No. 201410372966.8, entitled "BANKNOTE DISTRIBUTION METHOD, BANKNOTE DISTRIBUTION DEVICE AND FINANCIAL SELF-SERVICE EQUIPMENT", filed on July 31, 2014 with the State Intellectual Property Office of the People's Republic of China, which is incorporated herein by reference in its entirety.

**TECHNICAL FIELD**

The present disclosure relates to the field of financial equipment, and in particular to a method and a device for dispensing banknotes and financial self-service equipment.

**BACKGROUND**

With the development of economy, demand for self-service terminals is growing, and the number of financial self-service equipment in the financial industry constantly extends to meet the increasing market demand.
Presently, in existing financial self-service equipment, a banknote box is generally used to store banknotes, and one banknote box stores banknotes with one denomination. When a customer performs a transaction, the financial self-service equipment distributes banknotes to the customer by obtaining banknotes with multiple denominations from multiple different banknote boxes based on a banknote dispensing amount provided by the customer, thereby distributing banknotes with multiple denominations to the customer.
However, with limitations, such as a manufacturing cost and a device space, the number of banknote boxes in the existing financial self-service equipment is very limited. In addition, in a method for dispensing banknotes applied in the existing financial self-service equipment, it is required that one banknote box stores banknotes with only one denomination, thus the number of denominations of the banknotes in the financial self-service equipment is also very limited, which leads to a limited banknote dispensing capacity and a limited banknote dispensing scope of the financial self-service equipment, thereby failing to distribute banknotes with different denominations to a customer.

**SUMMARY**

A method for dispensing banknotes is provided according an embodiment of the present disclosure, for eliminating a limitation on the number of banknote denominations in financial self-service equipment, largely improving a banknote dispensing capacity and a banknote dispensing scope of the financial self-service equipment and satisfying the demand of distributing banknotes with different denominations to a customer, thereby improving customer experience.
A method for dispensing banknotes is provided according an embodiment of the present disclosure, which includes:

acquiring sequences and denominations of banknotes in several mixed banknote boxes, where the mixed banknote box is a banknote box storing banknotes with several denominations, and the banknotes in the mixed banknote box are taken and stored in a form of stack;

acquiring a number and denominations of banknotes in several single banknote boxes, where the single banknote box is a banknote box storing banknotes with only one denomination;

acquiring a banknote dispensing amount;

obtaining a banknote dispensing result based on a preset banknote dispensing rule and the banknote dispensing amount, where the banknote dispensing result records a number of banknotes taken from each of the mixed banknote boxes and the single banknote boxes, and a total denomination of the taken banknotes is equal to the banknote dispensing amount; and

outputting banknotes based on the banknote dispensing result.

Optionally, the process of obtaining the banknote dispensing result based on the preset banknote dispensing rule and the banknote dispensing amount includes:

obtaining the banknote dispensing result based on a preset mixed banknote box first banknote outputting method and the banknote dispensing amount.

Optionally, the process of obtaining the banknote dispensing result based on the preset mixed banknote box first banknote outputting method and the banknote dispensing amount includes steps S11 to S15.

In step S11, a number of banknotes is taken from each of the plurality of mixed banknote boxes to obtain an array of untaken mixed numbers, based on the sequences and the denominations of the banknotes in the mixed banknote boxes. A total denomination of banknotes corresponding to the array of mixed numbers is set as a total denomination of mixed banknotes. The total denomination of mixed banknotes is ensured to be as close as possible to but not greater than the banknote dispensing amount.

In step S12, it is determined whether the total denomination of mixed banknotes is less than or equal to the banknote dispensing amount. The process proceeds to step S13 in a case of positive determination, or else in a case of negative determination, the banknote dispensing fails.

In step S13, a difference between the banknote dispensing amount and the total denomination of mixed banknotes is calculated to obtain a residual value.

In step S14, corresponding banknotes are taken from the several single banknote boxes to meet the residual value, based on the number and the corresponding denominations of banknotes in the single banknote boxes. if the total denomination of banknotes taken from the several single banknote boxes is equal to the residual value, it indicates that the banknote dispensing is successful, and the number of banknotes taken from the current several mixed banknote boxes and single banknote boxes is obtained as the banknote dispensing result. In a case that the total denomination of banknotes taken from the several single banknote boxes fails to be equal to the residual value, the process proceeds to step S15.

In step S15, it is determined whether all arrays of mixed numbers have been obtained. The banknote dispensing fails in a case that it is determined that all the arrays of mixed numbers have been obtained. The process returns to step S11 in a case that it is determined that not all the arrays of mixed numbers have been obtained.

Optionally, the process of obtaining the banknote dispensing result based on the preset banknote dispensing rule and the banknote dispensing amount includes:

> obtaining the banknote dispensing result based on a preset single banknote box first banknote outputting method and the banknote dispensing amount.

Optionally, the process of obtaining the banknote dispensing result based on the preset single banknote box first banknote outputting method and the banknote dispensing amount includes steps S21 to S25.

In step S21, a number of banknotes is taken from each of the mixed banknote boxes to obtain an array of untaken mixed numbers, based on the sequences and the corresponding denominations of the banknotes in the mixed banknote boxes. A total denomination of banknotes corresponding to the array of mixed numbers is set as a total denomination of mixed banknotes, and the total denomination of mixed banknotes is ensured to be as far as possible away from the banknote dispensing amount.

In step S22, it is determined whether the total denomination of mixed banknotes is less than or equal to the banknote dispensing amount. The process proceeds to step S23 in a case of positive determination, or else in a case of negative determination, the banknote dispensing fails.

In step S23, a difference between the banknote dispensing amount and the total denomination of mixed banknotes is calculated to obtain a residual value.

In step S24, based on the number and the corresponding denominations of banknotes in the single banknote boxes, corresponding banknotes are taken from several single banknote boxes to meet the residual value. If the total denomination of banknotes taken from several single banknote boxes is equal to the residual value, it indicates that the banknote dispensing is successful, and the number of banknotes taken from the current several mixed banknote boxes and single banknote boxes is obtained as the banknote dispensing result. In a case that the total denomination of banknotes taken from several single banknote boxes fails to be equal to the residual value, the process proceeds to step S25.

In step S25, it is determined whether all arrays of mixed numbers have been obtained. The banknote dispensing fails in a case that it is determined that all the arrays of mixed numbers have been obtained, and the process proceeds to step S21 in a case that it is determined that not all the arrays of mixed numbers have been obtained.

Optionally, before the obtaining the banknote dispensing result based on the preset banknote dispensing rule and the banknote dispensing amount, the method further includes:

> determining whether the banknote dispensing amount is evenly divisible by a greatest common divisor of all denominations of the banknotes in the mixed banknote boxes and the single banknote boxes, and whether a total denomination of all the banknotes is greater than or equal to the banknote dispensing amount, wherein the process proceeds to the step of obtaining the banknote dispensing result based on the preset banknote dispensing rule of the mixed banknote box and the banknote dispensing amount in a case of positive determination, and the banknote dispensing fails in a case of negative determination.

Optionally, the method further includes:

recycling other banknotes which have been outputted to a banknote temporary storage to a mixed banknote box and performing the method for dispensing banknotes to re-distribute banknotes, if there is an abnormal banknote when the mixed banknote box outputs banknotes.

It can be seen from the above technical solutions that the present disclosure has the following advantages.

In the present disclosure, firstly, sequences and corresponding denominations of banknotes in several mixed banknote boxes are obtained. The mixed banknote box is a banknote box storing banknotes with several denominations, and the banknotes in the mixed banknote box are taken and stored in a form of stack. A number and denominations of banknotes in several single banknote boxes are acquired. The single banknote box is a banknote box storing banknotes with only one denomination. A current banknote dispensing amount is obtained. Then, a banknote dispensing result is obtained based on a preset banknote dispensing rule and the banknote dispensing amount. The banknote dispensing result records the number of banknotes taken from each of the mixed banknote boxes and the single banknote boxes, and a total denomination of the taken banknotes is equal to the banknote dispensing amount. Finally, banknotes are outputted based on the banknote dispensing result. In the present disclosure, financial self-service equipment using the method for dispensing banknotes can be configured with mixed banknote boxes, and the mixed banknote box can store banknotes with several denominations. Even if the number of banknote boxes in the financial self-service equipment is limited, the number of denominations of banknotes in the financial self-service equipment will not be limited, which largely improves a banknote dispensing capacity and a banknote dispensing scope of the financial self-service equipment and can satisfy the demand of distributing banknotes with different denominations to a customer, thereby improving customer experience.

BRIEF DESCRIPTION OF THE DRAWINGS

Figure 1 is a flow chart of a method for dispensing banknotes according to an embodiment of the present disclosure;

Figure 2 is a flow chart of a method for dispensing banknotes according to another embodiment of the present disclosure;

Figure 3 is a flow chart of a method for dispensing banknotes according to another embodiment of the present disclosure;

Figure 4 is a structure diagram of a device for dispensing banknotes according to an embodiment of the present disclosure; and

Figure 5 is a structure diagram of financial self-service equipment according to an embodiment of the present disclosure.

DETAILED DESCRIPTION OF THE EMBODIMENTS

A method and a device for dispensing banknotes and financial self-service equipment are provided according embodiments of the present disclosure, for eliminating a limitation on the number of banknote denominations in the financial self-service equipment, largely improving a banknote dispensing capacity and a banknote dispensing scope of the financial self-service equipment and satisfying the demand of distributing banknotes with different denominations to a customer, thereby improving customer experience.

To make an object, features and advantages of the invention more clear and easy to understand, the technical solutions according to embodiments of the invention will be described below clearly and fully in conjunction with the drawings in the embodiments of the invention. Apparently, the drawings described hereinafter are merely a few rather than all of the embodiments of the present disclosure. All other embodiments obtained by persons of ordinary skill in the art based on the embodiments of the present disclosure without creative efforts shall fall within the protection scope of the present disclosure.

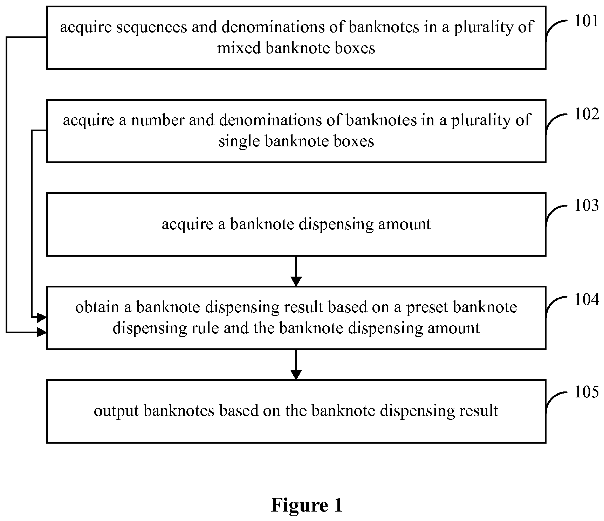

Referring to Figure 1, a method for dispensing banknotes according to an embodiment of the present disclosure includes steps 101 to 105.

In step 101, sequences and corresponding denominations of banknotes in several mixed banknote boxes are acquired.

In a transaction, before analysis and processing of banknote dispensing, the sequences and the corresponding denominations of banknotes in several mixed banknote boxes are first obtained. The mixed banknote box is a banknote box storing banknotes with several denominations, and the banknotes in the mixed banknote box are taken and stored in a form of stack.

In step 102, a number and denominations of banknotes in several single banknote boxes are acquired.

In a transaction, before the analysis and processing of banknote dispensing, the number and the denominations of banknotes in several single banknote boxes are first obtained. The single banknote box is a banknote box storing banknotes with only one denomination.

In step 103, a current banknote dispensing amount is obtained.

In a transaction, before the analysis and processing of banknote dispensing, the current banknote dispensing amount is obtained.

In step 104, a banknote dispensing result is obtained based on a preset banknote dispensing rule and the banknote dispensing amount.

After acquiring the sequences and the corresponding denominations of banknotes in several mixed banknote boxes, the number and the denominations of banknotes in several single banknote boxes, and the current banknote dispensing amount, the banknote dispensing result is obtained based on the preset banknote dispensing rule and the banknote dispensing amount. The banknote dispensing result records the number of banknotes taken from each of the mixed banknote boxes and the single banknote boxes, and a total denomination of the taken banknotes is equal to the banknote dispensing amount.

In step 105, banknotes are outputted based on the banknote dispensing result.

After the banknote dispensing result is obtained, banknotes are outputted based on the banknote dispensing result.

In the embodiment, the method for dispensing banknotes described above includes steps as follows. First, sequences and corresponding denominations of banknotes in several mixed banknote boxes are acquired. The mixed banknote box is a banknote box storing banknotes with several denominations, and the banknotes in the mixed banknote box are taken and stored in a form of stack. A number and denominations of banknotes in several single banknote boxes are acquired. The single banknote box is a banknote box storing banknotes with only one denomination. A current banknote dispensing amount. Then, a banknote dispensing result is obtained based on a preset banknote dispensing rule and the banknote dispensing amount. The banknote dispensing result records the number of banknotes taken from each of the mixed banknote boxes and the single banknote boxes, and a total denomination of the taken banknotes is equal to the banknote dispensing amount. Finally, banknotes are outputted based on the banknote dispensing result. In this embodiment, the financial self-service equipment using the method for dispensing banknotes can be configured with mixed banknote boxes, and the mixed banknote box can store banknotes with several denominations. Even if the number of banknote boxes in the financial self-service equipment is limited, the number of denominations of banknotes in the financial self-service equipment will not be limited, which largely improves a banknote dispensing capacity and a banknote dispensing scope of the financial self-service equipment and can satisfy the demand of distributing banknotes with different denominations to a customer, thereby improving customer experience.

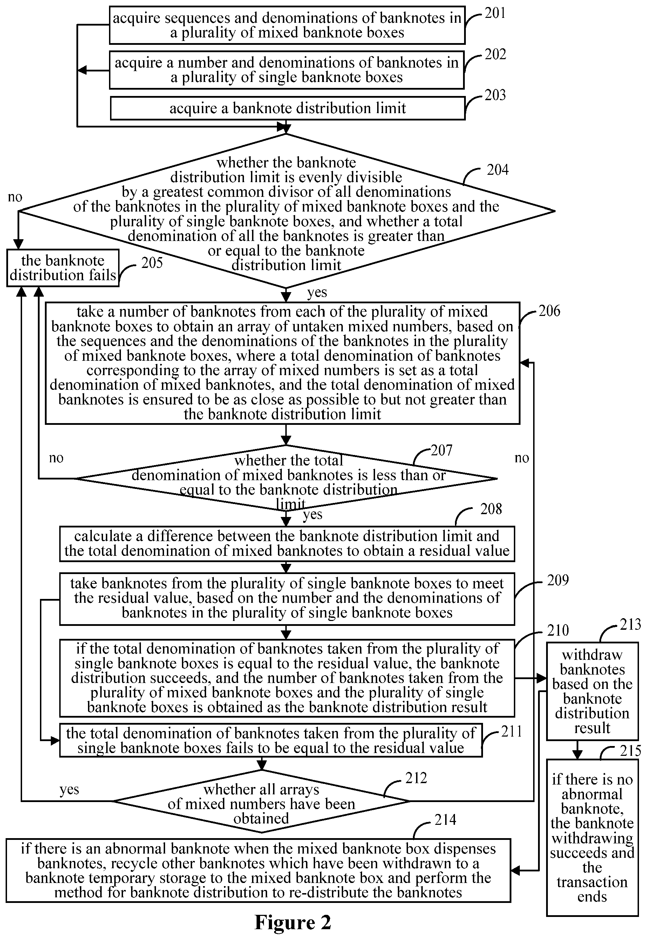

For ease of understanding, a method for dispensing banknotes according to the embodiment of the present disclosure is described below in detail. Referring to Figure 2, a method for dispensing banknotes according to another embodiment of the present disclosure includes steps 201 to 206.

In step 201, sequences and corresponding denominations of banknotes in several mixed banknote boxes are acquired.

In a transaction, before analysis and processing of banknote dispensing, the sequences and the corresponding denominations of banknotes in several mixed banknote boxes are first obtained, and the mixed banknote box is a banknote box storing banknotes with several denominations, and the banknotes in the mixed banknote box are taken and stored in a form of stack. Since the banknotes in the mixed banknote box are taken and stored in a form of stack, banknotes in the mixed banknote box follow a rule of "first-in last-out". When each banknote is stored into the mixed banknote box, a denomination and a sequence of the banknote are recorded. Therefore, when a banknote is taken from the mixed banknote box, the denomination of the taken banknote is known.

In step 202, a number and denominations of banknotes in several single banknote boxes are acquired.

In a transaction, before the analysis and processing of banknote dispensing, the number and the denominations of banknotes in several single banknote boxes are first obtained. The single banknote box is a banknote box storing banknotes with only one denomination.

In step 203, a current banknote dispensing amount is obtained.

In a transaction, before the analysis and processing of banknote dispensing, the current banknote dispensing amount is obtained.

In step 204, it is determined whether the banknote dispensing amount is evenly divisible by a greatest common divisor of all denominations of the banknotes in the mixed banknote boxes and the single banknote boxes, and whether a total denomination of all the banknotes is greater than or equal to the banknote dispensing amount. The process proceeds to step 206 in a case of positive determination; or else in a case of negative determination, the process proceeds to step 205.

In a transaction, a feasibility of banknote dispensing in the transaction may be determined before performing the banknote dispensing based on a banknote dispensing amount provided by a customer. If a total denomination of banknotes in financial self-service terminal is less than the banknote dispensing amount, there is no way to perform the banknote dispensing successfully. Therefore, it may be determined whether the banknote dispensing amount is evenly divisible by a greatest common divisor of all denominations of the banknotes in the mixed banknote boxes and the single banknote boxes, and whether a total denomination of all the banknotes is greater than or equal to the banknote dispensing amount. The process proceeds to step 206 in a case of positive determination; or else in a case of negative determination, the process proceeds to step 205.

It should be noted that, it is determined, based on a solvability condition of a multivariate first order equation, whether the banknote dispensing amount is evenly divisible by the greatest common divisor of all denominations of the banknotes in the mixed banknote boxes and the single banknote boxes. The process of determining whether the total denomination of all the banknotes is greater than or equal to the banknote dispensing amount is easily to be understood, and the banknote dispensing surely cannot be achieved if the total denomination of all the banknotes in banknote boxes is less than the banknote dispensing amount.

In step 205, the banknote dispensing fails.

The banknote dispensing fails, if the banknote dispensing amount cannot be met.

In step 206, an array of mixed numbers is formed by using the number of banknotes which have not been obtained in each of the multiple mixed banknote boxes, based on the sequences and the corresponding denominations of banknotes in the mixed banknote boxes. A total denomination of banknotes corresponding to the array of mixed numbers is set as a total denomination of mixed banknotes, and the total denomination of mixed banknotes is ensured to be as close as possible to but not greater than the banknote dispensing amount.

In the banknote dispensing, analysis and processing are performed based on a preset mixed banknote box first banknote outputting method in the financial self-service equipment. First, based on the sequences and the corresponding denominations of banknotes in the mixed banknote boxes, a number of banknotes is taken from each of the plurality of mixed banknote boxes to obtain an array of untaken mixed numbers. The total denomination of banknotes corresponding to the array of mixed numbers is set as a total denomination of mixed banknotes, and the total denomination of mixed banknotes is ensured to be as close as possible to but not greater than the banknote dispensing amount. It should be noted that, since the sequences and the corresponding denominations of banknotes in several mixed banknote boxes have been obtained previously, a total denomination of the first X banknotes in each of the mixed banknote boxes is known, where X is greater than or equal to zero. Therefore, with multiple combinations of the numbers of taken banknotes in several mixed banknote boxes, a total denomination of all banknotes taken from the mixed banknote boxes is ensured to be as close as possible to but not greater than the banknote dispensing amount. It should be noted that, the combination of the numbers is the array of mixed numbers, and the array of mixed numbers should be a combination which has not been obtained. For example, for three mixed banknote boxes, X banknotes are taken from a first mixed banknote box, Y banknotes are taken from a second mixed banknote box, and Z banknotes are taken from a third mixed banknote box. When step 206 is executed next time, the array of mixed numbers (X, Y, Z) cannot be obtained, since it has been obtained, and an array, such as (X, Y, Z-1) or (X, Y-1, Z), may be obtained. (X, Y, Z) cannot be obtained in another banknote dispensing transaction, unless the record is cleared after this banknote dispensing transaction is ended.

It is to be noted that, the total denomination of mixed banknotes is as close as possible to but not greater than the banknote dispensing amount. That is, in a case that the total denomination of mixed banknotes is able to be equal to the banknote dispensing amount, an array of mixed numbers corresponding to the banknote dispensing amount is selected, and in a case that the total denomination of mixed banknotes fails to be equal to the banknote dispensing amount, an array of mixed numbers corresponding to a total denomination of mixed banknotes which is slightly less than the banknote dispensing amount is selected. For example, for three mixed banknote boxes, (X, Y, Z-1) is selected, if (X, Y, Z) is greater than the banknote dispensing amount, and (X, Y, Z-1) is less than the banknote dispensing amount. It can be known from the above, it can be ensured that more banknotes are taken preferably from the mixed banknote boxes, in a case that the banknote dispensing amount is met.

It is to be noted that, the total denomination of mixed banknotes may be zero.

In step 207, it is determined whether the total denomination of mixed banknotes is less than or equal to the banknote dispensing amount. The process proceeds to step 208 in a case of positive determination; or else the process proceeds to step 205.

After the total denomination of mixed banknotes is obtained, it is determined whether the total denomination of mixed banknotes is less than or equal to the banknote dispensing amount. The process proceeds to step 208 in a case of positive determination; or else the process returns to step 205.

In step 208, a difference between the banknote dispensing amount and the total denomination of mixed banknotes is calculated to obtain a residual value.

After determining that the total denomination of mixed banknotes is less than or equal to the banknote dispensing amount, the difference between the banknote dispensing amount and the total denomination of mixed banknotes is calculated to acquire the residual value.

In step 209, based on number and corresponding denominations of banknotes in the single banknote boxes, corresponding banknotes are taken from several single banknote boxes to meet the residual value.

In order to analyze banknote dispensing for the residual value, corresponding banknotes are taken from several single banknote boxes to meet the residual value, based on the number and the corresponding denominations of banknotes in the single banknote boxes. It should be noted, since the numbers and the denominations of banknotes in the single banknote boxes have been obtained previously, the total number and the denomination of the banknotes in each of the single banknote boxes are known. Therefore, with multiple combinations of the numbers of taken banknotes from the several single banknote boxes, it is enabled that a total denomination of banknotes taken from all the single banknote boxes is equal to the residual value. For example, there are three single banknote boxes in total, i banknotes are taken from a first single banknote box, j banknotes are taken from a second single banknote box, and k banknotes are taken from a third single banknote box, and a total denomination of the i, j and k banknotes is equal to the residual value.

In step 210, if the total denomination of banknotes taken from several single banknote boxes is equal to the residual value, it indicates that the banknote dispensing is successful. The banknote dispensing result is the number of banknotes taken from the current several mixed banknote boxes and single banknote boxes.

The corresponding banknotes are taken from several single banknote boxes to meet the residual value, based on the number and the corresponding denominations of banknotes in the single banknote boxes. If the total denomination of banknotes taken from several single banknote boxes is equal to the residual value, it indicates that the banknote dispensing is successful, and the banknote dispensing result is the number of banknotes taken from the current several mixed banknote boxes and several single banknote boxes. It can be understood, for the examples in step 206 and step 209, the banknote dispensing result in this case is that X banknotes are taken from the first mixed banknote box, Y banknotes are taken from the second mixed banknote box, Z-1 banknotes are taken from the third mixed banknote box, i banknotes are taken from the first single banknote box, j banknotes are taken from the second single banknote box, and k banknotes are taken from the third single banknote box.

It should be noted, the banknote dispensing result records the number of banknotes taken from each of the mixed banknote boxes and the single banknote boxes, and the total denomination of the taken banknotes is enabled to be equal to the banknote dispensing amount.

In step 211, in a case that the total denomination of banknotes taken from several single banknote boxes fails to be equal to the residual value, the process proceeds to step 212.

Corresponding banknotes are taken from several single banknote boxes to meet the residual value, based on the number and the corresponding denominations of banknotes in the single banknote boxes. The process proceeds to step 212 in a case that the total denomination of banknotes taken from several single banknote boxes fails to be equal to the residual value.

It should be noted that the total denomination of banknotes taken from several single banknote boxes may be zero. That is to say, when the residual value is zero, the banknote dispensing amount can be met only by taking corresponding banknotes from the mixed banknote boxes based on the array of mixed numbers, without taking banknotes from the single banknote boxes.

In step 212, it is determined whether all arrays of mixed numbers have been obtained. The process proceeds to step 205 in a case of positive determination; or else the process returns to step 206.

After learning that the total denomination of banknotes taken from several single banknote boxes fails to be equal to the residual value, it is determined whether all arrays of mixed numbers have been obtained. The process proceeds to step 205 in a case of positive determination; or else the process returns to step 206. It can be understood, if all the arrays of mixed numbers have been obtained, it indicates that this transaction fails, because taking all different numbers of banknotes from those mixed banknote boxes have been tried and analyzed, but no array of mixed numbers can achieve the banknote dispensing. In a case that not all of the arrays of mixed numbers have been obtained, the process returns to step 206 to acquire an array of untaken mixed numbers.

In step 213, banknotes are outputted based on the banknote dispensing result.

After obtaining the banknote dispensing result, banknotes may be outputted based on the banknote dispensing result. It can be understood, for the example in step 210, X banknotes are taken from the first mixed banknote box, Y banknotes are taken from the second mixed banknote box, Z-1 banknotes are taken from the third mixed banknote box, i banknotes are taken from the first single banknote box, j banknotes are taken from the second single banknote box, and k banknotes are taken from the third single banknote box, for outputting banknotes.

In step 214, if there is an abnormal banknote when the mixed banknote box outputs banknotes, other banknotes which have been outputted to a banknote temporary storage are recycled to the mixed banknote box, and banknotes are re-distributed by performing the method for dispensing banknotes.

If there is an abnormal banknote when the mixed banknote box outputs banknotes, other banknotes which have been outputted to the banknote temporary storage are recycled to the mixed banknote box, and banknotes are re-distributed by performing the method for dispensing banknotes.

It should be noted, when a mixed banknote box outputs banknotes, there may be abnormal problems, for example, a banknote may be stuck, or a banknote state is abnormal (detecting a counterfeit banknote). In this case, abnormal banknotes should be recycled to an abnormal banknote recycling box. Therefore, the original banknote dispensing result is disturbed, other banknotes which have been outputted to the banknote temporary storage should be recycled to the mixed banknote box, and banknotes are re-distributed by performing the method for dispensing banknotes, i.e., returning to step 201.

It should be noted, a record of acquiring the array of mixed numbers should be cleared before returning to step 201.

In step 215, if there is no abnormality, it indicates that the banknote outputting is successful, and the transaction is accomplished.

If there is no abnormality, it indicates that the banknote outputting is successful, and the transaction is accomplished.

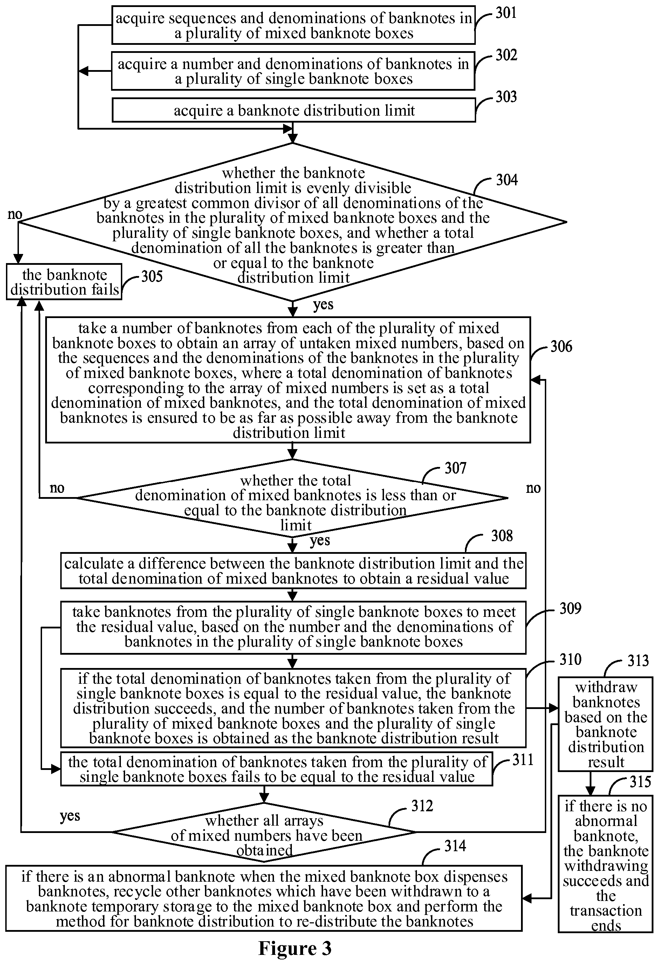

The mixed banknote box first banknote outputting method is explained in the above. Hereinafter a method for dispensing banknotes by using a single banknote box first banknote outputting method to perform analysis processing will be described in detail. Referring to Figure 3, a method for dispensing banknotes according to another embodiment of the present disclosure includes steps 301 to 315.

In step 301, sequences and corresponding denominations of banknotes in several mixed banknote boxes are acquired.

In a transaction, before analysis and processing of banknote dispensing, the sequences and the corresponding denominations of banknotes in several mixed banknote boxes are first obtained, and the mixed banknote box is a banknote box storing banknotes with several denominations, and the banknotes in the mixed banknote box are taken and stored in a form of stack. Since the banknotes in the mixed banknote box are taken and stored in a form of stack, banknotes in the mixed banknote box follow a rule of "first-in last-out". When each banknote is stored into the mixed banknote box, a denomination and a sequence of the banknote are recorded. Therefore, when a banknote is taken from the mixed banknote box, the denomination of the taken banknote is known.

In step 302, a number and denominations of banknotes in several single banknote boxes are acquired.

In a transaction, before the analysis and processing of banknote dispensing, the number and the denominations of banknotes in several single banknote boxes are first obtained. The single banknote box is a banknote box storing banknotes with only one denomination.

In step 303, a current banknote dispensing amount is obtained.

In a transaction, before the analysis and processing of banknote dispensing, the current banknote dispensing amount is obtained.

In step 304, it is determined whether the banknote dispensing amount is evenly divisible by a greatest common divisor of all denominations of the banknotes in the mixed banknote boxes and the single banknote boxes, and whether a total denomination of all the banknotes is greater than or equal to the banknote dispensing amount. The process proceeds to step 306 in a case of positive determination; or else in a case of negative determination, the process proceeds to step 305.

In a transaction, a feasibility of banknote dispensing in the transaction may be determined before performing the banknote dispensing based on a banknote dispensing amount provided by a customer. If a total denomination of banknotes in financial self-service terminal is less than the banknote dispensing amount, there is no way to perform the banknote dispensing successfully. Therefore, it may be determined whether the banknote dispensing amount is evenly divisible by the greatest common divisor of all denominations of the banknotes in the mixed banknote boxes and the single banknote boxes, and whether a total denomination of all the banknotes is greater than or equal to the banknote dispensing amount. The process proceeds to step 306 in a case of positive determination; or else in a case of negative determination, the process proceeds to step 305.

It should be noted that, it is determined, based on a solvability condition of a multivariate first order equation, whether the banknote dispensing amount is evenly divisible by the greatest common divisor of all denominations of the banknotes in the mixed banknote boxes and the single banknote boxes. The process of determining whether the total denomination of all the banknotes is greater than or equal to the banknote dispensing amount is easily to be understood, and the banknote dispensing surely cannot be achieved if the total denomination of all the banknotes in banknote boxes is less than the banknote dispensing amount.

In step 305, the banknote dispensing fails.

The banknote dispensing fails, if the banknote dispensing amount cannot be met.

In step 306, an array of mixed numbers is formed by using the number of banknotes which have not been obtained in each of the multiple mixed banknote boxes, based on the sequences and the corresponding denominations of banknotes in the mixed banknote boxes. A total denomination of banknotes corresponding to the array of mixed numbers is set as a total denomination of mixed banknotes, and the total denomination of mixed banknotes is ensured to be as far as possible away from the banknote dispensing amount.

In the banknote dispensing, analysis and processing are performed based on a preset single banknote box first banknote outputting method in the financial self-service equipment. First, the array of mixed numbers is formed by using the number of banknotes which have not been obtained in each of the multiple mixed banknote boxes, based on the sequences and the corresponding denominations of banknotes in the mixed banknote boxes. The total denomination of banknotes corresponding to the array of mixed numbers is set as a total denomination of mixed banknotes, and the total denomination of mixed banknotes is ensured to be as far as possible away from the banknote dispensing amount. It should be noted, since the sequences and the corresponding denominations of banknotes in several mixed banknote boxes have been obtained previously, a total denomination of the first X banknotes in each of the mixed banknote boxes is known, where X is greater than or equal to zero. Therefore, with multiple combinations of the numbers of taken banknotes in several mixed banknote boxes, a total denomination of all banknotes taken from the mixed banknote box is ensured to be as far as possible away from the banknote dispensing amount (that is, the total denomination of mixed banknotes is ensured to be as small as possible, while the total denomination of mixed banknotes is ensured to be as less as possible than the banknote dispensing amount). It should be noted, the combination of the numbers is the array of mixed numbers, and the array of mixed numbers should be a combination which has not been obtained. For example, for three mixed banknote boxes, X banknotes are taken from a first mixed banknote box, Y banknotes are taken from a second mixed banknote box, and Z banknotes are taken from a third mixed banknote box. When step 206 is executed next time, the array of mixed numbers (X, Y, Z) cannot be obtained, since it has been obtained, and an array, such as (X, Y, Z-1) or (X, Y-1, Z), may be obtained. (X, Y, Z) cannot be obtained in another banknote dispensing transaction, unless the record is cleared after this banknote dispensing transaction is ended.

It is to be noted that, the total denomination of mixed banknotes is as far as possible away from the banknote dispensing amount. That is, if the total denomination of mixed banknotes is able to be zero, zero is selected for the total denomination of mixed banknotes. If an array of mixed numbers corresponding to a total denomination of mixed banknotes which is zero has been obtained, the total denomination of mixed banknotes is slightly increased. For example, for three mixed banknote boxes, if (0, 0, 0) has been obtained, an array, such as (0, 0, 1), (0, 1, 0), or (1, 0, 0), may be selected, so that the total denomination of mixed banknotes is ensured to be as small as possible. For another example, if (X, Y, Z) has been obtained, an array, such as (X, Y, Z+1), may be selected. It can be known from the above, in a case that the banknote dispensing amount is met, it can be ensured that as few banknotes as possible are taken from the mixed banknote boxes, and as many banknotes as possible are taken from the single banknote boxes.

It is to be noted that, the total denomination of mixed banknotes may be zero.

In step 307, it is determined whether the total denomination of mixed banknotes is less than or equal to the banknote dispensing amount. The process proceeds to step 308 in a case of positive determination; or else the process returns to step 305.

After the total denomination of mixed banknotes is obtained, it is determined whether the total denomination of mixed banknotes is less than or equal to the banknote dispensing amount. The process proceeds to step 308 in a case of positive determination; or else the process returns to step 305.

In step 308, a difference between the banknote dispensing amount and the total denomination of mixed banknotes is calculated to obtain a residual value.

After determining that the total denomination of mixed banknotes is less than or equal to the banknote dispensing amount, the difference between the banknote dispensing amount and the total denomination of mixed banknotes may be calculated to acquire the residual value.

In step 309, based on the number and the corresponding denominations of banknotes in the single banknote boxes, corresponding banknotes are taken from several single banknote boxes to meet the residual value.

In order to analyze banknote dispensing for the residual value, corresponding banknotes are taken from several single banknote boxes to meet the residual value, based on the number and the corresponding denominations of banknotes in the single banknote boxes. It should be noted, since the numbers and the denominations of banknotes in the single banknote boxes have been obtained previously, the total number and the denomination of the banknotes in each of the single banknote boxes are known. Therefore, with multiple combinations of the numbers of taken banknotes from the several single banknote boxes, it is enabled that a total denomination of banknotes taken from all the single banknote boxes is equal to the residual value. For example, there are three single banknote boxes in total, i banknotes are taken from a first single banknote box, j banknotes are taken from a second single banknote box, and k banknotes are taken from a third single banknote box, and a total denomination of the i, j and k banknotes is equal to the residual value.

In step 310, in a case that the total denomination of banknotes taken from several single banknote boxes is equal to the residual value, it indicates that the banknote dispensing is successful. The banknote dispensing result is the number of banknotes taken from the current several mixed banknote boxes and single banknote boxes.

The corresponding banknotes are taken from several single banknote boxes to meet the residual value, based on the number and the corresponding denominations of banknotes in the single banknote boxes. If the total denomination of banknotes taken from several single banknote boxes is equal to the residual value, it indicates that the banknote dispensing is successful, and the banknote dispensing result is the number of banknotes taken from the current several mixed banknote boxes and multiple single banknote boxes. It can be understood, for the examples in step 306 and step 309, the banknote dispensing result in this case is that X banknotes are taken from the first mixed banknote box, Y banknotes are taken from the second mixed banknote box, Z+1 banknotes are taken from the third mixed banknote box, i banknotes are taken from the first single banknote box, j banknotes are taken from the second single banknote box, and k banknotes are taken from the third single banknote box.

It should be noted, the banknote dispensing result records the number of banknotes taken from each of the mixed banknote boxes and the single banknote boxes, and the total denomination of the taken banknotes is enabled to be equal to the banknote dispensing amount.

In step 311, the process proceeds to step 312, in a case that the total denomination of banknotes taken from several single banknote boxes fails to be equal to the residual value.

Corresponding banknotes are taken from several single banknote boxes to meet the residual value, based on the number and the corresponding denominations of banknotes in the single banknote boxes. The process proceeds to step 312, in a case that the total denomination of banknotes taken from several single banknote boxes fails to be equal to the residual value.

It should be noted that the total denomination of banknotes taken from several single banknote boxes may be zero. That is to say, when the residual value is zero, the banknote dispensing amount can be met only by taking corresponding banknotes from the mixed banknote boxes based on the array of mixed numbers, without taking banknotes from the single banknote boxes.

In step 312, it is determined whether all arrays of mixed numbers have been obtained. The process proceeds to step 305 in a case of positive determination; or else the process returns to step 306.

After learning that the total denomination of banknotes taken from several single banknote boxes fails to be equal to the residual value, it is determined whether all arrays of mixed numbers have been obtained. The process proceeds to step 305 in a case of positive determination; or else the process returns to step 306. It can be understood, if all the arrays of mixed numbers have been obtained, it indicates that this transaction fails, because taking all different numbers of banknotes from those mixed banknote boxes have been tried and analyzed, but no array of mixed numbers can achieve the banknote dispensing. In a case that not all of the arrays of mixed numbers have been obtained, the process returns to step 306 to acquire an array of untaken mixed numbers.

In step 313, banknotes are outputted based on the banknote dispensing result.

After obtaining the banknote dispensing result, banknotes may be outputted based on the banknote dispensing result. It can be understood, for the example in step 311, i banknotes are taken from the first single banknote box, j banknotes are taken from the second single banknote box, k banknotes are taken from the third single banknote box, X banknotes are taken from the first mixed banknote box, Y banknotes are taken from the second mixed banknote box, and Z+1 banknotes are taken from the third mixed banknote box, for outputting banknotes.

In step 314, if there is an abnormal banknote when a mixed banknote box outputs banknotes, other banknotes which have been outputted to a banknote temporary storage are recycled to the mixed banknote box, and banknotes are re-distributed by performing the method for dispensing banknotes.

If there is an abnormal banknote when the mixed banknote box outputs banknotes, other banknotes which have been outputted to the banknote temporary storage are recycled to the mixed banknote box, and banknotes are re-distributed by performing the method for dispensing banknotes.

It should be noted, when a mixed banknote box outputs banknotes, there may be abnormal problems, for example, a banknote may be stuck, or a banknote state is abnormal (detecting a counterfeit banknote). In this case, abnormal banknotes should be recycled to an abnormal banknote recycling box. Therefore, the original banknote dispensing result is disturbed, other banknotes which have been outputted to the banknote temporary storage should be recycled to the mixed banknote box, and banknotes are re-distributed by performing the method for dispensing banknotes, i.e., returning to step 301.

It should be noted, a record of acquiring the array of mixed numbers should be cleared before returning to step 301.

In step 315, if there is no abnormality, it indicates that the banknote outputting is successful, and the transaction is accomplished.

If there is no abnormality, it indicates that banknote outputting is successful, and the transaction is accomplished.

For ease of understanding, according to the embodiments of the present disclosure, the method for dispensing banknotes according to the embodiments of the present disclosure in multiple actual application scenarios is described below.

A method for dispensing banknotes includes steps as follows.

(1) Banknote boxes in financial self-service equipment are classified into two kinds, one is a single banknote box storing banknotes with only one denomination, and the other is a mixed banknote box storing banknotes with two or more denominations.

(2) A sequence and a denomination are acquired for each banknote in the mixed banknote box storing banknotes with two or more denominations in the financial self-service equipment. A data structure of each mixed banknote box is a stack. A banknote storing into the mixed banknote box is on the top of the stack, and banknote outputting starts also from the top of the stack, that is, first-in last-out. Assumed that the total denomination of banknotes in a mixed banknote box is n, each corresponding banknote from the top to the bottom of the stack is Di (i=1, 2, 3···n, where n is the total denomination of banknotes in the banknote box), and a total denomination of first k (k=1, 2, 3···n) banknotes is $\sum_{i=1}^{k} D_i = S_k$ .

(3) An ordered array S(i) of each mixed banknote box is calculated. S(1) = $D_1$, and S(i+1)=S(i)+$D_{(i+1)}$ is a recurrence formula. A general term formula of S(i) is obtained:

$$S_n = D_1 + D_2 + \cdots + D_n = \sum_{i=1}^{n} D_i .$$

(4) A preliminary feasibility of banknote dispensing is validated for the banknote dispensing amount before distributing banknotes by determining whether the banknote dispensing amount is evenly divisible by the greatest common divisor of all denominations of the banknotes in the financial self-service equipment, and whether a total denomination of all banknotes remaining in the financial self-service equipment is greater than the banknote dispensing amount.

(5) It is determined whether a banknote dispensing algorithm configured by the financial self-service equipment is a mixed banknote box first banknote outputting method or a single banknote box first banknote outputting method.

(6) If there is one and only one available mixed banknote box in the financial self-service equipment, banknotes are distributed based on the banknote dispensing algorithm configured by the financial self-service equipment, based on a mode of one mixed banknote box configured in the financial self-service equipment, and the process proceeds to step (8) when banknote dispensing is accomplished. Or else, the process proceeds to step (7).

(7) If there are more than one available mixed banknote boxes in the financial self-service equipment, banknotes are distributed based on the banknote dispensing algorithm configured by the financial self-service equipment, based on a mode of multiple mixed banknote boxes configured in the financial self-service equipment.

(8) A banknote dispensing result is compared with the number of banknotes remaining in each of the mixed banknote boxes and the single banknote boxes and it is determined whether every banknote boxes have enough banknotes to perform banknote outputting operations.

(9) A banknote outputting command is sent to a computer chip. If a mixed banknote box outputs an abnormal banknote, and there are banknotes outputted to a banknote temporary storage, other banknotes are recycled into the mixed banknote box, and banknotes are distributed again based on the banknote dispensing algorithm provided by the solutions.

(10) The process ends.

The process of validating the preliminary feasibility of banknote dispensing for the banknote dispensing amount before distributing banknotes based on step (4) includes the following steps.

(41) A total denomination of first i (i=1, 2, 3, ..., n, where n is the total denomination of banknotes in a mixed banknote box) banknotes in each mixed banknote box storing banknotes with mixed multiple denominations is acquired.

(42) All single banknote boxes which store banknotes with only one denomination in the financial self-service equipment and corresponding denominations of the banknotes are acquired.

(43) The numbers of remaining banknotes corresponding to denominations of banknotes in all the single banknote boxes which store banknotes with only one denomination are acquired.

(44) The total denomination of banknotes in the financial self-service equipment is determined based on the all denominations in the two kinds of banknote boxes.

If the total denomination of banknotes is not less than the banknote dispensing amount, and the banknote dispensing amount is evenly divisible by only one denomination of banknotes remaining in the financial self-service equipment or a greatest common divisor of several denominations of the banknotes remaining in the financial self-service equipment, banknotes continue to be distributed, or else, the banknote dispensing fails.

The method for distributing banknotes, based on a mode of one mixed banknote box configured in the financial self-service equipment, if there is one and only one available mixed banknote box in the financial self-service equipment is further described as below.

It is assumed that a mixed banknote box is A, $A_i$ represents the i-th mixed banknote box, $A_{ij}$ represents the j-th banknote in the i-th mixed banknote box, and $\sum_{j=1}^{k} A_{ij} = SA_{ik}$ represents a total denomination of first k banknotes in the i-th mixed banknote box.

It is assumed that the banknote dispensing amount is denoted as total, a single banknote box is denoted as B, and $B_i$ represents the i-th single banknote box.

It is assumed that the banknote dispensing result is that the i-th mixed banknote box outputs $X_i$ banknotes, and the i-th single banknote box outputs $Y_i$ banknotes.

Depending on whether the banknote dispensing algorithm configured by the financial self-service equipment obtained in step (5) is the mixed banknote box first banknote outputting method or the single banknote box first banknote outputting method, the method includes step (61) or step (62).

(61) The algorithm configured by the financial self-service equipment is the mixed banknote box first banknote outputting method

The method is benefit for decreasing the number of banknotes in a mixed banknote box. If the financial self-service equipment has only one mixed banknote box, and all the other banknote boxes are single banknote boxes, the detailed banknote dispensing process is described as below.

(611) the denominations of the first, the second ... the i-th ... until the last banknote in sequence from the first banknote to the last banknote are calculated to acquire an array of amount. A value of the i-th element in the array is equal to the denominations of i banknotes in total, namely, the denominations of the first banknote to the i-th banknote.

For example, assuming there are 14 banknotes in the mixed banknote box in total, and denominations of the first to the fourth banknote are respectively:

$D_1$=10, $D_2$=5, $D_3$=10, $D_4$=20, $D_5$=20, $D_6$=10, $D_7$=5, $D_8$=5, $D_9$=20, $D_{10}$=5, $D_{11}$=20, $D_{12}$=10, $D_{13}$=5, $D_{14}$=5.

| sequence number i | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| denomination D | 10 | 5 | 10 | 20 | 20 | 10 | 5 | 5 | 20 | 5 | 20 | 10 | 5 | 5 |
| array S | 10 | 15 | 25 | 45 | 65 | 75 | 80 | 85 | 105 | 110 | 130 | 140 | 145 | 150 |

A general term formula is:

$$S_{(1)}=D1, \; S_{(2)}=D1+D2, \; S_{(n)}=D_1+D_2+ \; ... \; +D_n= \sum_{i=1}^{n} D_i \; .$$

(612) S is looked for in the array of the mixed banknote box which is the most close to but not greater than the banknote dispensing amount, such as $S_i$.

(613) A residual value is calculated: $C=Total-S_{(i)}$. In a case that C=0, it indicates that the banknote dispensing is successful, and that the banknote dispensing can be successful even with only one mixed banknote box A, and the process ends; or else the process proceeds to step (614) to continue the banknote dispensing process.

(614) In a case that the residual value C is not evenly divisible by the greatest common divisor of all denominations of the banknotes in all single banknote boxes, the process proceeds to step (615) to continue the banknote dispensing process; or else, banknotes are distributed for the residual value by using the single banknote boxes, based on a traditional method. If the banknotes are distributed and the number of banknotes in various banknote boxes satisfies a requirement, it indicates that the banknote dispensing is successful, and the process ends. The process proceeds to step (615) to continue the banknote dispensing process, in a case that the residual value C is evenly divisible by the greatest common divisor of all denominations of the banknotes in all single banknote boxes, and the number of banknotes in various banknote boxes does not satisfy the requirement.

(615) i=i-1. In a case that i>1, the process returns to step (613) to continue the banknote dispensing process, and in a case that i≤1, it indicates that the banknote dispensing fails and the process ends.

An example of the mixed banknote box first banknote outputting method is given as below.
Financial self-service equipment has three banknote boxes which are A, B and C. Banknotes and denominations of the banknotes in the mixed banknote box A are shown in the following table. A denomination of banknotes in the single banknote box B is 50. A denomination of banknotes in the single banknote box C is 100. It is assumed that the banknote box B or the banknote box C has enough remaining banknotes for dispensing.

| sequence number i | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| denomination D | 10 | 5 | 10 | 20 | 20 | 10 | 5 | 5 | 20 | 5 | 20 | 10 | 5 | 5 |
| array S | 10 | 15 | 25 | 45 | 65 | 75 | 80 | 85 | 105 | 110 | 130 | 140 | 145 | 150 |

An array S is obtained by calculating based on the mixed banknote box A, and an element S(14)=150 in the array S is the most close to the total denomination of the distributed banknotes =255, that is, i=14. A residual value is calculated that C=255-150=105. Since 105 is not evenly divisible by gcd (50, 100)=50, the banknote dispensing is not successful.
Further, i=i-1 is calculated to acquire S(13)=145, and a residual value is calculated that C=255-145=110, which is not evenly divisible by 50. Similarly, for S(12)=140, S(11)=130, S(10)=110, the banknote dispensing is not successful.
When S(9)=105, a residual value C=255-105=150 is evenly divisible by 50, $X_1$=1, $X_2$=1; or $X_1$=3, $X_2$=0, can be obtained by solving non-positive integral solutions of a dualistic first order equation $50X_1+100X_2=150$.
Therefore, there are two kinds of the final banknote dispensing result, which are respectively that the mixed banknote box A outputs nine banknotes, the banknote box B of denomination 50 outputs one banknote, and the banknote box C of denomination 100 outputs one banknote; or that the mixed banknote box A outputs nine banknotes, and the banknote box B of denomination 50 outputs three banknotes.

(62) The algorithm configured by the financial self-service equipment is the single banknote box first banknote outputting method

The mixed banknote box first banknote outputting method has the following disadvantages. When a mixed banknote box outputs an abnormal banknote, and there are banknotes outputted to a banknote temporary storage, other banknotes should be recycled into the mixed banknote box, and distributing banknotes again, based on the banknote dispensing algorithm provided by the solutions.
The single banknote box first banknote outputting method can reduce the effect brought by the disadvantages of the mixed banknote box first banknote outputting method to a minimum. A detailed banknote dispensing process is described as below.

(621) If the banknote dispensing amount Total is not evenly divisible by the greatest common divisor of all denominations of the banknotes in the mixed banknote boxes, banknotes are distributed continually based on step (622), or else, banknotes are distributed continually based on a traditional method which only makes single banknote boxes participate in the banknote dispensing.

Assuming that financial self-service equipment has four banknote boxes which are A, B, C and D. The banknote box A is a mixed banknote box, denominations of which are 5 and 20. A denomination of the banknote box B is 10. A denomination of the banknote box C is 50. A denomination of the banknote box D is 100. Banknotes are distributed first for Total=220. Since the greatest common divisor of (10, 50, 100) is gcd (10, 50, 100)=10, and 220 is evenly divisible by 10, B, C and D can be used to distribute banknotes for 220. If the remaining number of banknotes in each of the B, C and D banknote box meets the requirement, it indicates that the banknote dispensing is successful, and the banknote box A does not participate in the banknote dispensing.

If the remaining number of banknotes in each of the B, C and D banknote box does not meet the requirement, it indicates that the banknote dispensing fails, and banknotes are distributed continually by using the A banknote box, based on the method in step (622).

(622) Assuming that the mixed banknote box has n banknotes in total, the denominations of the first, the second ... the i-th ... until the last banknote in sequence from the first banknote to the last banknote are calculated to acquire an array of amount. A value of the i-th element in the array is equal to the denominations of i banknotes in total, namely, the denominations of the first banknote to the i-th banknote.

For example, assuming there are 14 banknotes in the mixed banknote box A in total, and denominations of the first to the fourth banknote are respectively:

$$D_1=10, \ D_2=5, \ D_3=10, \ D_4=20, \ D_5=20, \ D_6=10, \ D_7=5, \ D_8=5, \ D_9=20, \ D_{10}=5, \ D_{11}=20,$$

$$D_{12}=10, \ D_{13}=5, \ D_{14}=5.$$

| sequence number i | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| denomination D | 10 | 5 | 10 | 20 | 20 | 10 | 5 | 5 | 20 | 5 | 20 | 10 | 5 | 5 |
| array S | 10 | 15 | 25 | 45 | 65 | 75 | 80 | 85 | 105 | 110 | 130 | 140 | 145 | 150 |

A general term formula is:

$$S_{(1)}=D1, \ S_{(2)}=D1+D2, \ S_{(n)}=D_1+D_2+ \ ... \ +D_n= \sum_{i=1}^{n} D_i \ .$$

(623) If the banknote dispensing amount Total is not evenly divisible by the greatest common divisor of all denominations of the banknotes in all single banknote boxes, the banknote dispensing can be successful only if the mixed banknote box A participates in the banknote dispensing.

(624) The first element S(1) is looked for in the array of the mixed banknote box, namely, S(i) when i=1.

(625) A residual value is calculated: C=Total-S(i). In a case that C=0, it indicates that the banknote dispensing is successful, and that the banknote dispensing can be successful even with only one mixed banknote box A, and the process ends; or else, the process proceeds to step (626) to continue the banknote dispensing process.

(626) In a case that the residual value C is not evenly divisible by the greatest common divisor of all denominations of the banknotes in all single banknote boxes, the process proceeds to step (627) to continue the banknote dispensing process; or else, banknotes are distributed for the residual value by using the single banknote boxes, based on a traditional method. If the banknotes are distributed and the number of banknotes in various banknote boxes satisfies a requirement, it indicates that the banknote dispensing is successful, and the process ends. The process proceeds to step (627) to continue the banknote dispensing process, in a case that the residual value C is evenly divisible by the greatest common divisor of all denominations of the banknotes in all single banknote boxes, and the number of banknotes in various banknote boxes does not satisfy the requirement.

(627) i=i+1. In a case that i≤n, the process returns to step (625) to continue the banknote dispensing process, and in a case that i>n, it indicates that the banknote dispensing fails and the process ends.

An example of the mixed banknote box minimum number method is given as follows.

Financial self-service equipment has three banknote boxes which are A, B and C. Banknotes and denominations of the banknotes in the mixed banknote box A are shown in the following table. A denomination of banknotes in the single banknote box B is 50. A denomination of banknotes in the single banknote box C is 100. It is assumed that the banknote box B or the banknote box C has enough remaining banknotes for dispensing.

| sequence number i | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| denomination D | 10 | 5 | 10 | 20 | 20 | 10 | 5 | 5 | 20 | 5 | 20 | 10 | 5 | 5 |
| array S | 10 | 15 | 25 | 45 | 65 | 75 | 80 | 85 | 105 | 110 | 130 | 140 | 145 | 150 |

The required total denomination for the banknote dispensing is 255. Since the greatest common divisor of 50 and 100 is gcd (50, 100)=50, and 255 is not evenly divisible by 50, the banknote dispensing of 255 cannot be successful by using banknotes only in the banknote box B and the banknote box C.

The mixed banknote box A participates in the banknote dispensing. Based on the array S of the mixed banknote box, an element S(1) in the array S is equal to 10 when i=1, and a residual value is calculated: C=255-10=245. Since 245 is not evenly divisible by gcd (50, 100)=50, this banknote dispensing is not successful.

Further, i=i+1 is calculated to acquire S(2)=15, and a residual value is calculated C=255-15=240, which is not evenly divisible by 50. Similarly, S(3)=25, S(4)=45, S(5)=65, S(6)=75, S(7)=80, S(8)=85, and banknote dispensing is not successful.

When S(9)=105, C=255-105=150 is evenly divisible by 50, $X_1$=1, $X_2$=1; or $X_1$=3, $X_2$=0, can be obtained by solving non-positive integral solutions of a dualistic first order equation $50X_1+100X_2=150$.

Therefore, there are two kinds of the final banknote dispensing result, which are respectively that the mixed banknote box A outputs nine banknotes, the banknote box B of denomination 50 outputs one banknote, and the banknote box C of denomination 100 outputs one banknote; or that the mixed banknote box A outputs nine banknotes, and the banknote box B of denomination 50 outputs three banknotes.

Further, if there are more than one available mixed banknote boxes in the financial self-service equipment in step (7), the distributing banknotes, based on the mode of multiple mixed banknote boxes configured in the financial self-service equipment, is described as below.

It is assumed that there are m mixed banknote boxes, $A_i$ represents the i-th mixed banknote box, $A_{ij}$ represents the j-th banknote in the i-th mixed banknote box, and $\sum_{j=1}^{k} A_{ij} = SA_{ik}$ represents a total denomination of first k banknotes in the i-th mixed banknote box.

It is assumed that a single banknote box is B, and $B_i$ represents the i-th single banknote box.

It is assumed that a banknote dispensing result is that the i-th mixed banknote box outputs $X_i$ banknotes, and the i-th single banknote box outputs $Y_i$ banknotes.

It is assumed that the banknote dispensing amount is denoted as total, and the financial self-service equipment has n mixed banknote boxes and m single banknote boxes, it can be computed that

$$\sum_{j=1}^{X1} A_{1j} + \sum_{j=1}^{X2} A_{2j} + ... + \sum_{j=1}^{Xn} A_{nj} + B_1 Y_1 + B_2 Y_2 + ... + B_m Y_m = Total$$ that is,

$$\sum_{i=1}^{n} \sum_{j=1}^{Xi} A_{ij} + \sum_{i=1}^{m} B_i Y_i = Total .$$

Assuming a total denomination of first j banknotes is $S_{ij}$ for the i-th mixed banknote box, it can be computed that $S_{ij} = \sum_{k=1}^{j} A_{ik}$ , where $A_{ik}$ represents a denomination of the k-th banknote in the i-th mixed banknote box.

For a mixed banknote box, a sequence number of which is i, and which has p remaining banknotes, an array can be obtained: $S_{i1}$, $S_{i2}$, $S_{i3}$ ... $S_{ik}$, $S_{i(k+1)}$ ... Sip, where $S_{i(k+1)} = S_{ik} + A_{i(k+1)}$.

Depending on whether the banknote dispensing algorithm configured by the financial self-service equipment obtained in step (5) is the mixed banknote box first banknote outputting method or the single banknote box first banknote outputting method, the method includes step (71) or step (72).

The mixed banknote box first banknote outputting method in step (71) is described as below. Financial self-service equipment has multiple mixed banknote boxes and multiple single banknote boxes, a priority order of banknote outputting is configured for the multiple mixed banknote boxes, a result of the banknote dispensing algorithm is outputting banknotes preferably from the mixed banknote boxes, and the multiple mixed banknote boxes performs banknote outputting based on the configured priority order of banknote outputting. For example, if financial self-service equipment is configured with three mixed banknote boxes M1, M2 and M3 and two single banknote boxes P1 and P2, and a priority order of banknote outputting configured in M1, M2 and M3 is M1→M2→M3, a result of the banknote dispensing algorithm is: making M1 output the most banknotes first, then making M2 output banknotes as many as possible in a case that banknotes outputted by M1 are enough, and finally making M3 output banknotes as many as possible, in a case that banknotes outputted by M1 and M2 are enough.

The single banknote box first banknote outputting method based on step (72) is described as below. Financial self-service equipment has multiple mixed banknote boxes and multiple single banknote boxes, a result of the banknote dispensing algorithm is outputting banknotes preferably from the single banknote boxes so that a total denomination of banknotes outputted from the single banknote boxes to be greatest, and then outputting banknotes from the mixed banknote boxes. For example, if financial self-service equipment is configured with three mixed banknote boxes M1, M2 and M3 and two single banknote boxes P1 and P2, and a priority order of banknote outputting of the financial self-service equipment is P1 and P2→M1, M2 and M3, a result of the banknote dispensing algorithm is first making P1 and P2 output banknotes as much total denomination as possible.

(71) Mixed banknote box first banknote outputting method

It is assumed that financial self-service equipment is configured with m mixed banknote boxes, and a priority order of banknote outputting required by the financial self-service equipment is $A_1$, $A_2$ ... $A_m$. It is assumed that $A_i$ banknote boxes has $X_i$ remaining banknotes, an array of banknote outputting of the mixed banknote boxes during banknote dispensing is D, $D_1$ is the first banknote to be outputted, and $D_i$ is the i-th banknote to be outputted.

For $A_1$, $A_2$ ... $A_m$,

$A_1$: $S_{11}=A_{11}$, $S_{12}=A_{11}+A_{12}$, $S13=A_{11}+A_{12}+A_{13}...S_{1,X1}=A_{11}+A_{12}+...+A_{1,X1}$,
resulting in an array $S_1$ of $A_1$, that is, $S_{11}$, $S_{12}...S_{1,X1}$;

$A_2$: $S_{21}=A_{21}$, $S_{22}=A_{21}+A_{22}$, $S_{23}=A_{21}+A_{22}+A_{23}...S_{2,X2}=A_{21}+A_{22}+...+A_{2,X2}$,
...
resulting in an array $S_2$ of $A_2$, that is, $S_{21}$, $S_{22}...S_{2,X2}$;

$A_m$: $S_{m1}=A_{m1}$, $S_{m2}=A_{m1}+A_{m2}...S_{m,X2}=A_{m1}+A_{m2}+...+A_{m,Xm}$,
resulting in an array $S_m$ of $A_m$, that is, $S_{m1}$, $S_{m2}...S_{m,Xm}$.

(711) let j=1, and a residual value $C_j$=Total;

(712) $S_{ji}$ is looked for in an array $S_j$ which includes $S_{j1}$, $S_{j2}$ ... $S_{j,Xj}$ of a mixed banknote boxes $A_j$ which is the most close to but not greater than the residual $C_j$ of $S_{ji}$, where $1<=i<=X_j$, and $X_j$ is the number of remaining banknotes in the mixed banknote boxes $A_j$. The process proceeds to step (715) to continue the banknote dispensing process, in a case that $S_{ji}$ does not exist, or else the process proceeds to step (713) to continue the banknote dispensing process.

(713) A residual value is calculated $C_{j+1}=C_j-S_{ji}$. The banknote dispensing ends in a case that $C_j+1=0$, or else the process proceeds to step (714).

(714) It is determined whether j<=m. The process proceeds to step (712) to continue the banknote dispensing process in a case that j<=m, or else the process proceeds to step (715) to continue the banknote dispensing process.

(715) Banknotes are distributed for the residual value $C_j+1$ obtained in step (714) by using the single banknote boxes, based on a traditional method. The process ends in a case that banknote dispensing is successful, or else the process proceeds to step (716) to continue the banknote dispensing process.

(716) i=i-1 for $S_{ji}$. In a case that i>=1, $C_{j+1} = C_{j+1}+S_{ji}-S_{j(i-1)}$ and the process proceeds to step (715) to continue the banknote dispensing process, and in a case that i<1, the process proceeds to step (717) to continue the banknote dispensing process.

(717) j=j-1 for $C_j+1$. In a case that j>=1, $C_{j+1}=C_{j+1}+S_{ji}-S_{j(i-1)}$ and the process proceeds to step (715) to continue the banknote dispensing process; and in a case that j<1, banknotes are distributed based on the traditional method, only with the single banknote boxes and without the mixed banknote boxes. The process ends in a case that banknote dispensing is successful; or else the process ends and the banknote dispensing fails.

For example, it is assumed that financial self-service equipment is configured with three banknote boxes which are a mixed banknote box M1 (its denominations are 2 and 5), a mixed banknote box M2 (its denominations are 10 and 20) and a single banknote box P (its denomination is 50), p has enough remaining banknotes, and a configured sequence of banknote outputting is M1 prior to M2. Let it be assumed that information of existing banknotes in M1 and M2 at some time is as follows:

Information table of existing banknotes in the banknote box M1

| sequence number i | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| denomination D | 5 | 5 | 2 | 2 | 2 | 5 | 2 | 5 | 2 | 5 | 5 | 5 | 2 | 5 |
| array S | 5 | 10 | 12 | 14 | 16 | 21 | 23 | 28 | 30 | 35 | 40 | 45 | 47 | 52 |

Information table of existing banknotes in the banknote box M2

| sequence number i | 1 | 2 | 3 | 4 | 5 | 6 | 7 | 8 | 9 | 10 |
|---|---|---|---|---|---|---|---|---|---|---|
| denomination D | 20 | 10 | 10 | 20 | 20 | 10 | 10 | 10 | 20 | 10 |
| array S | 20 | 30 | 40 | 60 | 80 | 90 | 100 | 110 | 130 | 140 |

If a total denomination of the distributed banknotes is 176, steps of the banknote dispensing algorithm are as follows:

a maximum value of S of M1 which is the most close to but not greater than 176 is 52, the mantissa is 176-52=124, hence, continual banknote dispensing by using the banknote box M2 and P fails;

a value of S of M1 which is the most close to but not greater than 52 is 47, the mantissa is 176-47=129, hence, continual banknote dispensing by using the banknote box M2 and P fails;

a value of S of M1 which is the most close to but not greater than 47 is 45, the mantissa is 176-45=131, hence, continual banknote dispensing by using the banknote box M2 and P fails;

a value of S of M1 which is the most close to but not greater than 45 is 40, the mantissa is 176-40=136, hence, continual banknote dispensing by using the banknote box M2 and P fails;

when a value of S is 16, that is, M1 outputs five banknotes, the mantissa is 176-16=160, and the banknote dispensing is proceeded by using the banknote box M2 and P; a maximum value 140 of S of M2 which is the most close to but not greater than 160 is taken, the mantissa is 160-140=20, hence, continual banknote dispensing by using the banknote box P fails; a maximum value 130 of S of M2 which is the most close to but less than 140 is continually taken, the mantissa is 160-130=30, hence, banknote dispensing fails; and a maximum value 110 of S of M2 which is the most close to but less than 130 is continually taken, the mantissa is 160-110=50, hence, continual banknote dispensing by using the banknote box P is successful.

Therefore, a final result of banknote dispensing is that M1 outputs five banknotes (amount to 16), M2 outputs eight banknotes (amount to 110), and P outputs one banknotes (amount to 50).

If a total denomination of the distributed banknotes is 177, steps of the banknote dispensing algorithm are as follows:

a maximum value of S of M1 which is the most close to but not greater than 177 is 52, the mantissa is 176-52=125, hence, continual banknote dispensing by using the banknote box M2 and P fails;

a value of S of M1 which is the most close to but not greater than 52 is 47, the mantissa is 176-47=130, hence, the banknote dispensing is proceeded by using the banknote box M2, a value of S of M2 which is the most close to but not greater than 130 is 130, which is continually outputting nine banknotes, the mantissa is 130-130=0, hence, banknote dispensing is successful. Therefore, a banknote dispensing result is that M1 outputs eleven banknotes which amounts to 47, M2 outputs nine banknotes which amounts to 130. After banknote outputting, information of the banknote box M1 and M2 is as follows.

Information table of the banknote box M1 after banknote outputting is successful

| sequence number i | 1 |
|---|---|
| denomination D | 5 |
| array S | 5 |

Information table of the banknote box M2 after banknote outputting is successful

| sequence number i | 1 | 2 |
|---|---|---|
| denomination D | 10 | 20 |
| array S | 10 | 30 |

(72) Single banknote box first banknote outputting method

(721) In a case that the banknote dispensing amount Total is not evenly divisible by the greatest common divisor of all denominations of the banknotes in all single banknote boxes, the banknote dispensing is proceeded based on step (722); and in a case that the banknote dispensing amount Total is evenly divisible by the greatest common divisor of all denominations of the banknotes in all single banknote boxes, the process ends if banknote dispensing is successful, and the banknote dispensing is proceeded based on step (722) if banknote dispensing fails. In this case, only a banknote box A with mixed denominations participates in the banknote dispensing, the banknote dispensing can be successful.

(722) It is assumed that financial self-service equipment has m mixed banknote boxes, $A_i$ banknote boxes has $X_i$ remaining banknotes, an array of banknote outputting of the mixed banknote boxes during banknote dispensing is D, $D_1$ is the first banknote to be outputted, and $D_i$ is the i-th banknote to be outputted.
For $A_1, A_2 ... A_m$,

$A_1$: $S_{11}=A_{11}$, $S_{12}=A_{11}+A_{12}$, $S13=A_{11}+A_{12}+A_{13}...S_{1,X1}=A_{11}+A_{12}+...+A_{1,X1}$,
resulting in an array $S_1$ of $A_1$, that is, $S_{11}$, $S_{12}...S_{1,X1}$;

$A_2$: $S_{21}=A_{21}$, $S_{22}=A_{21}+A_{22}$, $S_{23}=A_{21}+A_{22}+A_{23}...S_{2,X2}=A_{21}+A_{22}+...+A_{2,X2}$,
...
resulting in an array $S_2$ of $A_2$, that is, $S_{21}$, $S_{22}...S_{2,X2}$;

$A_m$: $S_{m1}=A_{m1}$, $S_{m2}=A_{m1}+A_{m2}...S_{m,X2}=A_{m1}+A_{m2}+...+A_{m,Xm}$,
resulting in an array $S_m$ of $A_m$, that is, $S_{m1}$, $S_{m2}...S_{m,Xm}$.

The elements $S_{11}$, $S_{12}...S_{1,X1}$ in the array $S_1$ of $A_1$, every elements $S_{21}$, $S_{22}...S_{2,X2}$ in the array $S_2$ of $A_2$ and every elements $S_{m1}$, $S_{m2}...S_{m,Xm}$ in the array $S_m$ of $A_m$ are formed into an array which are ranked based on an order from small to large, where n is 1, 2, ..., $X_1+X_2+...+X_m$. For any positive integers i and j where $1<=i<j<=X_1+X_2+...+X_m$, there is $S_i<S_j$. Let i=1.

(723) A residual value $C_j$=Total-$S_i$ is calculated. The banknote dispensing is proceeded based on step (724), if $C_j$ is not evenly divisible by the greatest common divisor of all denominations of the banknotes in all the single banknote boxes; and if not, banknotes are distributed based on a traditional method. In a case that banknotes are successfully distributed, the process ends, and in a case that banknotes fail to be distributed, the banknote dispensing goes on based on step (724).

(724) Let i=i+1, if $i<=X_1+X_2+...+X_m$, the process proceeds to step (723), and if not, the banknote dispensing fails and the process ends.

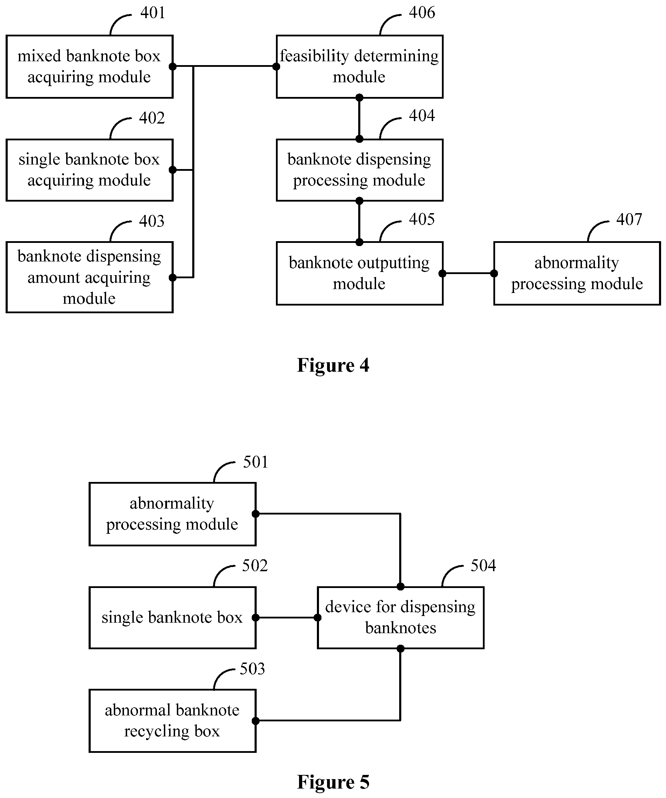

The method for dispensing banknotes based on the embodiments of the present disclosure is described in the above, and hereinafter a device for dispensing banknotes according to the embodiments of the present disclosure will be described in detail. Referring to Figure 4, an embodiment of the device for dispensing banknotes according to the embodiments of the present disclosure includes a mixed banknote box acquiring module 401, a single banknote box acquiring module 402, a banknote dispensing amount acquiring module 403, a banknote dispensing processing module 404 and a banknote outputting module 405.

The mixed banknote box acquiring module 401 is configured to acquire sequences and corresponding denominations of banknotes in several mixed banknote boxes, where the mixed banknote box is a banknote box storing banknotes with several denominations, and the banknotes in the mixed banknote box are taken and stored in a form of stack.

The single banknote box acquiring module 402 is configured to acquire a number and denominations of banknotes in several single banknote boxes, where the single banknote box is a banknote box storing banknotes with only one denomination.

The banknote dispensing amount acquiring module 403 is configured to acquire a current banknote dispensing amount.

The banknote dispensing processing module 404 is configured to obtain a banknote dispensing result based on a preset banknote dispensing rule and the banknote dispensing amount, where the banknote dispensing result records the number of banknotes taken from each of the mixed banknote boxes and the single banknote boxes so that a total denomination of the taken banknotes is equal to the banknote dispensing amount.

The banknote outputting module 405 is configured to output banknotes based on the banknote dispensing result.

The device for dispensing banknotes according to the embodiment of the present disclosure may further include a feasibility determining module 406 and an abnormality processing module 407.

The feasibility determining module 406 is configured to determine whether the banknote dispensing amount is evenly divisible by the greatest common divisor of all denominations of the banknotes in the mixed banknote boxes and the single banknote boxes, and whether a total denomination of all the banknotes is greater than or equal to the banknote dispensing amount, trigger the banknote dispensing processing module 404 in a case of positive determination, or else indicate that the banknote dispensing fails.

The abnormality processing module 407 is configured to recycle other banknotes which have been outputted to a banknote temporary storage to the mixed banknote box and trigger the device for dispensing banknotes to re-distribute the banknotes, in a case that there is an abnormal banknote in the banknotes taken from the plurality of mixed banknote boxes when the banknote outputting module 405 dispenses banknotes.

In the embodiment, in the process of banknote dispensing transaction, first, the mixed banknote box acquiring module 401 acquires sequences and corresponding denominations of banknotes in several mixed banknote boxes. The mixed banknote box is a banknote box storing banknotes with several denominations, and the banknotes in the mixed banknote box are taken and stored in a form of stack. The single banknote box acquiring module 402 acquires a number and denominations of banknotes in several single banknote boxes. The single banknote box is a banknote box storing banknotes with only one denomination. The banknote dispensing amount acquiring module 403 obtains a current banknote dispensing amount. Then a feasibility determining module 406 determines whether the banknote dispensing amount is evenly divisible by the greatest common divisor of all denominations of the banknotes in the mixed banknote boxes and the single banknote boxes, and whether a total denomination of all the banknotes is greater than or equal to the banknote dispensing amount, triggers a banknote dispensing processing module 404 in a case of positive determination, or else indicates that the banknote dispensing fails. Next, the banknote dispensing processing module 404 obtains a banknote dispensing result based on a preset banknote dispensing rule and the banknote dispensing amount. The banknote dispensing result records the number of banknotes taken from each of the mixed banknote boxes and the single banknote boxes, and a total denomination of the taken banknotes is enabled to be equal to the banknote dispensing amount. Finally, the banknote outputting module 405 outputs banknotes based on the banknote dispensing result. The abnormality processing module 407 recycles other banknotes which have been outputted to a banknote temporary storage to the mixed banknote box and trigger the device for dispensing banknotes to re-distribute the banknotes, if there is an abnormal banknote in the banknotes taken from the mixed banknote boxes when the banknote outputting module 405 dispenses banknotes.

The device for dispensing banknotes is mainly described in the above, and hereinafter financial self-service equipment will be described in detail. Referring to Figure 5, an embodiment of financial self-service equipment according to the embodiments of the present disclosure includes a mixed banknote box 501, a single banknote box 502, an abnormal banknote recycling box 503, and a device for dispensing banknotes 504 corresponding to the embodiment in Figure 4.

The abnormal banknote recycling box 501 is configured to recycle an abnormal banknote found in the financial self-service equipment in the process of transaction.

The mixed banknote box 502 is configured to store banknotes with several denominations, and the banknotes in the mixed banknote box are taken and stored in a form of stack.

The single banknote box 503 is configured to store banknotes with only one denomination.

As may be clearly understood by those skills in the art, for convenience and brevity of description, specific operating processes of the above systems, devices and units can refer to corresponding processes in the above embodiments of the method, which are not repeatedly described herein.

In the embodiments according to the present disclosure, it should be understood that, the disclosed systems, devices and methods can be implemented by other methods. For example, the above embodiments of the device are only illustrative. For example, dividing the units is only based on logical functions, and there are other dividing modes in practical implementations. For example, multiple units or components can be combined or integrated into another system, or some features can be ignored or do not execute. In addition, coupling among shown or discussed parts which may be direct coupling or communication connection can be via some interfaces, and the direct coupling or communication connection among devices or units can be electrical, mechanical or other forms.

Units for showing separation components may or not may be separated physically. Components for displaying units may or not may be a physical unit, that is, may be located in a position, or may be distributed to multiple network units. Some or all of units may be selected to implement objects of the technical solutions according to the embodiments, according to practical requirements.

In addition, various function units according to various embodiments of the present disclosure may be integrated into a processing center, or various function units may exist independently, or two or more than two of the above units may be integrated into a unit. The above integrated units may be implemented in a form of hardware, or in a form of a software function unit.

The integrated unit can be stored in a readable storage medium of a computing device, if the functions are implemented in a form of a soft function unit and sold or used as an independent product. Based on that insight, the technical solutions according to the present application essentially or contributing to the conventional technology or all or some of the technical solutions can be embodied in a form of a software product, and the computer software product is stored in a storage medium, which includes several instructions used for a computing device (may be a personal computer, a server, or a network device) to execute all or some of steps described in various embodiments of the present disclosure. The storage medium in the forgoing includes various media which can store program codes, such as, a USB disk, a removable hard disk, a read-only memory (ROM), a random access memory (RAM), a magnetic disk, or an optical disk.

As described above, the above embodiments are only to illustrate the technical solutions of the present disclosure, but not to limit the present disclosure. Even the present disclosure is illustrated in detail referring to the above embodiments, it should be understood by those skills in the art, the technical solutions according to the above embodiments can be modified, or some technical features in the technical solutions can be substituted by equivalents; and those modifications or substitutes do not make the essence of the technical solutions departing from the spirit and scope of the technical solutions according to the embodiments of the present disclosure.

**Claims**

1. A method for dispensing banknotes, comprising:

   acquiring sequences and denominations of banknotes in a plurality of mixed banknote boxes, wherein each of the plurality of mixed banknote boxes is a banknote box storing banknotes with a plurality of denominations and the banknotes in the mixed banknote box are taken and stored in a form of stack;
   acquiring a number and denominations of banknotes in a plurality of single banknote boxes, wherein each of the plurality of single banknote boxes is a banknote box storing banknotes with only one denomination;
   acquiring a banknote dispensing amount;

obtaining a banknote dispensing result based on a preset banknote dispensing rule and the banknote dispensing amount, wherein the banknote dispensing result records a number of banknotes taken from each of the plurality of mixed banknote boxes and the plurality of single banknote boxes, and wherein a total denomination of the taken banknotes is equal to the banknote dispensing amount; and

outputting banknotes based on the banknote dispensing result.

2. The method for dispensing banknotes according to claim 1, wherein the process of obtaining the banknote dispensing result based on the preset banknote dispensing rule and the banknote dispensing amount comprises:

obtaining the banknote dispensing result based on a preset mixed banknote box first banknote outputting method and the banknote dispensing amount.

3. The method for dispensing banknotes according to claim 2, wherein the process of obtaining the banknote dispensing result based on the preset mixed banknote box first banknote outputting method and the banknote dispensing amount comprises:

step S11, taking a number of banknotes from each of the plurality of mixed banknote boxes to obtain an array of untaken mixed numbers, based on the sequences and the denominations of the banknotes in the plurality of mixed banknote boxes, wherein a total denomination of banknotes corresponding to the array of mixed numbers is set as a total denomination of mixed banknotes, and the total denomination of mixed banknotes is ensured to be as close as possible to but not greater than the banknote dispensing amount;

step S12, determining whether the total denomination of mixed banknotes is less than or equal to the banknote dispensing amount, wherein the process proceeds to step S 13 in a case of positive determination, and the banknote dispensing fails in a case of negative determination;

step S13, calculating a difference between the banknote dispensing amount and the total denomination of mixed banknotes to obtain a residual value;

step S14, taking banknotes from the plurality of single banknote boxes to meet the residual value, based on the number and the denominations of banknotes in the plurality of single banknote boxes, wherein in a case that the total denomination of banknotes taken from the plurality of single banknote boxes is equal to the residual value, the banknote dispensing succeeds, and the number of banknotes taken from the plurality of mixed banknote boxes and the plurality of single banknote boxes is obtained as the banknote dispensing result, and in a case that the total denomination of banknotes taken from the plurality of single banknote boxes fails to be equal to the residual value, the process proceeds to step S 15; and

step S 15, determining whether all arrays of mixed numbers have been obtained, wherein the banknote dispensing fails in a case that it is determined that all the arrays of mixed numbers have been obtained, and the process returns to step S11 in a case that it is determined that not all the arrays of mixed numbers have been obtained.

4. The method for dispensing banknotes according to claim 1, wherein the process of obtaining the banknote dispensing result based on the preset banknote dispensing rule and the banknote dispensing amount comprises:

obtaining the banknote dispensing result based on a preset single banknote box first banknote outputting method and the banknote dispensing amount.

5. The method for dispensing banknotes according to claim 4, wherein the process of obtaining the banknote dispensing result based on the preset single banknote box first banknote outputting method and the banknote dispensing amount comprises:

step S21, taking a number of banknotes from each of the plurality of mixed banknote boxes to obtain an array of untaken mixed numbers, based on the sequences and the denominations of the banknotes in the plurality of mixed banknote boxes, wherein a total denomination of banknotes corresponding to the array of mixed numbers is set as a total denomination of mixed banknotes, and the total denomination of mixed banknotes is ensured to be as far as possible away from the banknote dispensing amount;

step S22, determining whether the total denomination of mixed banknotes is less than or equal to the banknote dispensing amount, wherein the process proceeds to step S23 in a case of positive determination, and the banknote dispensing fails in a case of negative determination;

step S23, calculating a difference between the banknote dispensing amount and the total denomination of mixed banknotes to obtain a residual value;

step S24, taking banknotes from the plurality of single banknote boxes to meet the residual value, based on the number and the denominations of banknotes in the plurality of single banknote boxes, wherein in a case that the total denomination of banknotes taken from the plurality of single banknote boxes is equal to the residual value, the banknote dispensing succeeds, and the number of banknotes taken from the plurality of mixed banknote boxes and the plurality of single banknote boxes is obtained as the banknote dispensing result, and in a case that the total denomination of banknotes taken from the plurality of single banknote boxes fails to be equal to the residual value, the process proceeds to step S25; and

step S25, determining whether all arrays of mixed numbers have been obtained, wherein the banknote dispensing fails in a case that it is determined that all the arrays of mixed numbers have been obtained, and the process returns to step S21 in a case that it is determined that not all the arrays of mixed numbers have been obtained.

6. The method for dispensing banknotes according to claim 1, wherein before the obtaining the banknote dispensing result based on the preset banknote dispensing rule and the banknote dispensing amount, the method further comprises:

determining whether the banknote dispensing amount is evenly divisible by a greatest common divisor of all denominations of the banknotes in the plurality of mixed banknote boxes and the plurality of single banknote boxes, and whether a total denomination of all the banknotes is greater than or equal to the banknote dispensing amount, wherein the process proceeds to the step of obtaining the banknote dispensing result based on the preset banknote dispensing rule and the banknote dispensing amount in a case of positive determination, and the banknote dispensing fails in a case of negative determination.

7. The method for dispensing banknotes according to claim 1, wherein the method further comprises:

recycling other banknotes which have been outputted to a banknote temporary storage to the mixed banknote box and performing the method for dispensing banknotes to re-distribute the banknotes, in a case that there is an abnormal banknote when the mixed banknote box outputs banknotes.

8. A device for dispensing banknotes, comprising:

a mixed banknote box acquiring module configured to acquire sequences and denominations of banknotes in a plurality of mixed banknote boxes, wherein each of the plurality of mixed banknote boxes is a banknote box storing banknotes with a plurality of denominations, and the banknotes in the mixed banknote box are taken and stored in a form of stack;
a single banknote box acquiring module configured to acquire a number and denominations of banknotes in a plurality of single banknote boxes, wherein each of the plurality of single banknote boxes is a banknote box storing banknotes with only one denomination;
a banknote dispensing amount acquiring module configured to acquire a current banknote dispensing amount;
a banknote dispensing processing module configured to obtain a banknote dispensing result based on a preset banknote dispensing rule and the banknote dispensing amount, wherein the banknote dispensing result records a number of banknotes taken from each of the plurality of mixed banknote boxes and the plurality of single banknote boxes, and wherein a total denomination of the taken banknotes is equal to the banknote dispensing amount; and
a banknote outputting module configured to output banknotes based on the banknote dispensing result.

9. The device for dispensing banknotes according to claim 8, further comprising:

a feasibility determining module configured to determine whether the banknote dispensing amount is evenly divisible by a greatest common divisor of all denominations of the banknotes in the plurality of mixed banknote boxes and the plurality of single banknote boxes, and whether a total denomination of all the banknotes is greater than or equal to the banknote dispensing amount, trigger the banknote dispensing processing module in a case of positive determination, and indicate that the banknote dispensing fails in a case of negative determination; and
an abnormality processing module configured to recycle other banknotes which have been outputted to a banknote temporary storage to the mixed banknote box and trigger the device for dispensing banknotes to re-distribute the banknotes, in a case that there is an abnormal banknote in the banknotes taken from the plurality of mixed banknote boxes when the banknote outputting module outputs banknotes.

10. Financial self-service equipment, comprising a mixed banknote box, a single banknote box and an abnormal banknote recycling box, wherein

the abnormal banknote recycling box is configured to recycle an abnormal banknote found in the financial self-service equipment in a process of transaction;

the mixed banknote box is configured to store banknotes with a plurality of denominations, wherein the banknotes in the mixed banknote box are taken and stored in a form of stack; and

the single banknote box is configured to store banknotes with only one denomination,

wherein the financial self-service equipment further comprises the device for dispensing banknotes according to claim 8 or claim 9.

```
┌────────────────────────────────────────────────────┐
│ acquire sequences and denominations of banknotes in │⌐ 101
│ a plurality of mixed banknote boxes                 │
└────────────────────────────────────────────────────┘

┌────────────────────────────────────────────────────┐
│ acquire a number and denominations of banknotes in  │⌐ 102
│ a plurality of single banknote boxes                │
└────────────────────────────────────────────────────┘

┌────────────────────────────────────────────────────┐
│           acquire a banknote dispensing amount      │⌐ 103
└────────────────────────────────────────────────────┘
                         │
                         ▼
┌────────────────────────────────────────────────────┐
│ obtain a banknote dispensing result based on a      │⌐ 104
│ preset banknote dispensing rule and the banknote    │
│ dispensing amount                                   │
└────────────────────────────────────────────────────┘
                         │
                         ▼
┌────────────────────────────────────────────────────┐
│ output banknotes based on the banknote dispensing   │⌐ 105
│ result                                              │
└────────────────────────────────────────────────────┘
```

**Figure 1**

**Figure 2**

acquire sequences and denominations of banknotes in a plurality of mixed banknote boxes ⌐301

acquire a number and denominations of banknotes in a plurality of single banknote boxes ⌐302

acquire a banknote distribution limit ⌐303

whether the banknote distribution limit is evenly divisible by a greatest common divisor of all denominations of the banknotes in the plurality of mixed banknote boxes and the plurality of single banknote boxes, and whether a total denomination of all the banknotes is greater than or equal to the banknote distribution limit ⌐304

no

the banknote distribution fails ⌐305

yes

take a number of banknotes from each of the plurality of mixed banknote boxes to obtain an array of untaken mixed numbers, based on the sequences and the denominations of the banknotes in the plurality of mixed banknote boxes, where a total denomination of banknotes corresponding to the array of mixed numbers is set as a total denomination of mixed banknotes, and the total denomination of mixed banknotes is ensured to be as far as possible away from the banknote distribution limit ⌐306

whether the total denomination of mixed banknotes is less than or equal to the banknote distribution limit ⌐307

no          no

yes

calculate a difference between the banknote distribution limit and the total denomination of mixed banknotes to obtain a residual value ⌐308

take banknotes from the plurality of single banknote boxes to meet the residual value, based on the number and the denominations of banknotes in the plurality of single banknote boxes ⌐309

if the total denomination of banknotes taken from the plurality of single banknote boxes is equal to the residual value, the banknote distribution succeeds, and the number of banknotes taken from the plurality of mixed banknote boxes and the plurality of single banknote boxes is obtained as the banknote distribution result ⌐310

withdraw banknotes based on the banknote distribution result ⌐313

the total denomination of banknotes taken from the plurality of single banknote boxes fails to be equal to the residual value ⌐311

if there is no abnormal banknote, the banknote withdrawing succeeds and the transaction ends ⌐315

whether all arrays of mixed numbers have been obtained ⌐312

yes

if there is an abnormal banknote when the mixed banknote box dispenses banknotes, recycle other banknotes which have been withdrawn to a banknote temporary storage to the mixed banknote box and perform the method for banknote distribution to re-distribute the banknotes ⌐314

**Figure 3**

401

mixed banknote box
acquiring module

402

single banknote box
acquiring module

403

banknote dispensing
amount acquiring
module

406

feasibility determining
module

404

banknote dispensing
processing module

405

banknote outputting
module

407

abnormality
processing module

**Figure 4**

501

abnormality
processing module

502

single banknote box

503

abnormal banknote
recycling box

504

device for dispensing
banknotes

**Figure 5**

# INTERNATIONAL SEARCH REPORT

| International application No. |
|---|
| **PCT/CN2015/083710** |

**A. CLASSIFICATION OF SUBJECT MATTER**

G07D 11/00 (2006.01) i

According to International Patent Classification (IPC) or to both national classification and IPC

**B. FIELDS SEARCHED**

Minimum documentation searched (classification system followed by classification symbols)

G07D; G07F

Documentation searched other than minimum documentation to the extent that such documents are included in the fields searched

Electronic data base consulted during the international search (name of data base and, where practicable, search terms used)

CNPAT, CNKI, WPI, EPODOC: mix, cash box, cash distribution, cash dispensing, casher, withdrawing money, face value, change, cash, bill, money, currency, banknote?, bank paper?, note?, coin?, cassette, type, kind, order, stacker

**C. DOCUMENTS CONSIDERED TO BE RELEVANT**

| Category* | Citation of document, with indication, where appropriate, of the relevant passages | Relevant to claim No. |
|---|---|---|
| PX | CN 104134275 A (GRG BANKING EQUIPMENT CO., LTD.), 05 November 2014 (05.11.2014), claims 1-10 | 1-10 |
| PX | CN 104504803 A (GRG BANKING EQUIPMENT CO., LTD.), 08 April 2015 (08.04.2015), description, paragraphs 5, 43-62 and 125-135, and figures 1-5 | 1-10 |
| PX | CN 104504804 A (GUANGZHOU GRGB ANKING INFORMATION TECHNOLOGY CO., LTD. et al.), 08 April 2015 (08.04.2015), description, paragraphs 5, 49-83 and 145-172, and figures 1-5 | 1-10 |
| A | JP 2014016755 A (HITACHI OMRON TERMINAL SOLU.), 30 January 2014 (30.01.2014), the whole document | 1-10 |
| A | CN 101894414 A (OKI ELECTRIC INDUSTRY CO., LTD.), 24 November 2010 (24.11.2010), the whole document | 1-10 |
| A | JP 2010020720 A (GLORY KOGYO K.K.), 28 January 2010 (28.01.2010), the whole document | 1-10 |

☒ Further documents are listed in the continuation of Box C.  ☒ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 16 September 2015 (16.09.2015) | **10 October 2015 (10.10.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LUO, Peng** Telephone No.: (86-10) **62414444** |
|---|---|

Form PCT/ISA/210 (second sheet) (July 2009)

**INTERNATIONAL SEARCH REPORT**

| International application No. |
| --- |
| **PCT/CN2015/083710** |

| C (Continuation). | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 102289859 A (INDUSTRIAL AND COMMERCIAL BANK OF CHINA LIMITED), 21 December 2011 (21.12.2011), the whole document | 1-10 |

Form PCT/ISA/210 (continuation of second sheet) (July 2009)

## INTERNATIONAL SEARCH REPORT
### Information on patent family members

| International application No. |
| --- |
| **PCT/CN2015/083710** |

| Patent Documents referred in the Report | Publication Date | Patent Family | Publication Date |
| --- | --- | --- | --- |
| CN 104134275 A | 05 November 2014 | None | |
| CN 104504803 A | 08 April 2015 | None | |
| CN 104504804 A | 08 April 2015 | None | |
| JP 2014016755 A | 30 January 2014 | None | |
| CN 101894414 A | 24 November 2010 | JP 5419541 B2 | 19 February 2014 |
| | | JP 2010267189 A | 25 November 2010 |
| | | CN 101894414 B | 13 February 2013 |
| JP 2010020720 A | 28 January 2010 | None | |
| CN 102289859 A | 21 December 2011 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201410372966